# FASCICULE DE BREVET EUROPEEN

(11) **EP 1 460 830 B1**
(45) Date de publication et mention de la délivrance du brevet: **13.08.2008**
(21) Numéro de dépôt: 04290747.7
(22) Date de dépôt: 19.03.2004
(51) Int. Cl.: H04N 1/32

(54) **Système de gestion d'une flotte de télécopieurs reliés à un même réseau local**
System zur Steuerung einer Vielzahl von an einem Lokalen Netzwerk verbundenen Faksimilegeräten
System for managing a plurality of facsimile machines connected to the same local area network

(30) Priorité: 20.03.2003 FR 0303667
(43) Date de publication de la demande: 22.09.2004
(73) Titulaire: SAGEM Communication, 75015 Paris (FR)
(72) Inventeur: Kuroczycki, Daniel, 94260 Fresnes (FR)
(74) Mandataire: Maillet, Alain

(56) Documents cités:
- EP-A- 1 037 435
- US-A1- 2002 046 274
- US-A1- 2002 049 839

## Description

### DOMAINE TECHNIQUE DE L'INVENTION

La présente invention concerne un système de gestion d'une flotte de télécopieurs reliés à un même réseau local. De tels télécopieurs sont par exemple des télécopieurs dont l'accès à des télécopieurs externes au réseau local passe soit par le réseau local lui-même, soit par le réseau téléphonique commuté.

### ARRIERE-PLAN TECHNOLOGIQUE

Aujourd'hui, les télécopieurs sont devenus des appareils usuels si bien que dans une même entreprise, peuvent en coexister plusieurs pour en définitive des mêmes utilisateurs. Pour fonctionner correctement, un télécopieur doit être paramétré, c'est-à-dire doit disposer d'un certain nombre de paramètres de configuration, tels que son propre numéro d'appel, l'heure, la date, le nom de l'utilisateur principal, etc. Par ailleurs, chaque utilisateur transmet des télécopies souvent à des mêmes personnes, si bien qu'il est intéressant que le télécopieur dispose d'un répertoire dans lequel à un identifiant d'une personne correspond le numéro d'appel de son télécopieur.

Lorsqu'une entreprise dispose de plusieurs télécopieurs, il est nécessaire de les paramétrer l'un de manière sensiblement identique aux autres. L'opération de paramétrage de l'ensemble de cette flotte de télécopieurs peut s'avérer longue et fastidieuse. De plus, ces télécopieurs d'une même flotte ont des parties de répertoire qui sont identiques : des noms et numéros d'appel correspondant se retrouvent sur des télécopieurs différents de la flotte. Il en résulte que l'entrée des répertoires est en partie répétée d'une machine sur l'autre ce qui peut là aussi s'avérer long et fastidieux à réaliser.

De même, si la gestion des consommables que sont le papier et le toner ne pose pas de problèmes majeurs quand le nombre de télécopieurs à gérer est relativement peu important, il peut en être autrement quand la flotte de télécopieur est relativement importante.

Il est donc apparu intéressant de prévoir un système de gestion d'une flotte de télécopieurs qui va pouvoir prendre en charge ces informations de paramètres de configuration, ces informations de répertoire et ces informations d'état et les gérer de manière centralisée. Toutes ces informations et d'autres éventuellement sont appelées dans la suite de la description des informations de gestion dans la mesure où on cherchera à en assurer la gestion au niveau d'une unité de gestion centralisée.

Un tel système de gestion d'une flotte de télécopieurs est essentiellement constitué d'une unité de gestion et d'une pluralité de télécopieurs qui sont tous reliés à un réseau local. Le document US 2002/0046274 décrit un protocole d'enregistrement d'une machine, par exemple un télécopieur, lors de sa première connexion à un réseau local. Pour ce faire, le document US 2002/0046274 décrit l'attribution d'un nom et d'une adresse fixes, à cette machine par un administrateur système, ces noms et adresse étant ensuite fournis à un serveur mail et à un système de contrôle.

Chaque télécopieur comprend des moyens pour le stockage d'informations de gestion dudit télécopieur, des moyens pour transférer à ladite unité de gestion des informations de gestion et des moyens pour recevoir des informations de gestion à une adresse physique et une adresse logique prédéterminée.

Quant à ladite unité de gestion, elle comprend des moyens pour le stockage d'informations de gestion des télécopieurs à gérer, des moyens pour transférer à un télécopieur des informations de gestion à son adresse physique et son adresse logique et des moyens pour recevoir des informations de gestion.

Les problèmes évoqués ci-dessus sont résolus dès lors que chaque télécopieur et l'unité de gestion sont capables d'échanger des informations de gestion. Or, le problème qui se pose est celui de la configuration de chacun d'eux afin que ces échanges d'informations de gestion puisse se faire facilement.

Le but qui est donc poursuivi par la présente invention est de proposer des moyens qui permettent à l'unité de gestion et à chaque télécopieur de se configurer mutuellement afin qu'ils puissent échanger entre eux ces informations de gestion.

### DESCRIPTION GENERALE DE L'INVENTION

La présente invention concerne ainsi un système de gestion d'une flotte de télécopieurs reliés à un même réseau local, ledit système comprenant au moins une unité de gestion reliée audit réseau local, chaque télécopieur comprenant des moyens de stockage des informations de gestion dudit télécopieur, des moyens de transfert à ladite unité de gestion desdites informations de gestion et des moyens de réception desdites informations de gestion à une adresse physique et une adresse logique prédéterminée, et ladite unité de gestion comprenant des moyens de stockage d'une pluralité desdites informations de gestion desdits télécopieurs, des moyens de transfert à un chacun desdits télécopieur desdites informations de gestion à son adresse physique et son adresse logique et des moyens de réception de la pluralité desdites informations de gestion.

Afin d'atteindre le but énoncé ci-dessus, ledit système comprend encore, au niveau de chaque télécopieur , des moyens d'identification émettant, préalablement à sa prise en charge par ladite unité de gestion, une trame d'identification incluant l'adresse logique et l'adresse physique dudit télécopieur et, au niveau de ladite unité de gestion, des moyens d'identification recevant de chacun desdits télécopieurs une pluralité de ladite trame d'identification incluant l'adresse logique et l'adresse physique de chacun desdits télécopieurs , des moyens établissant une connexion avec chacun des serveurs de service agencés dans chacun desdits télécopieurs à l'adresse logique et à l'adresse physique contenues dans ladite trame d'identification, et,
si la connexion a été établie, prenant en charge ledit télécopieur à ladite adresse logique et à ladite adresse physique et effectuant ensuite des échanges d'informations de gestion entre eux, ou
si la connexion n'a pas été établie, demandant à l'utilisateur une adresse logique valide à associer à ladite adresse physique et ré-essayant d'établir une connexion.

Selon une autre caractéristique de l'invention, ladite adresse logique et ladite adresse physique sont respectivement l'adresse IP et l'adresse physique dans ledit réseau local dudit télécopieur.

Selon une autre caractéristique de l'invention, chaque télécopieur comporte un client de service transférant des 'informations de gestion vers l'unité de gestion de sa propre initiative et en ce que ladite unité de gestion comporte un serveur de gestion correspondant, lesdits moyens d'identification de ladite unité de gestion transmettant l'adresse logique et le port dudit serveur de gestion audit télécopieur lorsque ladite connexion a pu être établie.

Selon une autre caractéristique de l'invention, lesdites informations de gestion transmises par ledit client de service de sa propre initiative sont des informations d'état dudit télécopieur, lesdites informations étant transmises lors du déclenchement d'une alarme.

Selon une autre caractéristique de l'invention, ledit client de service et ledit serveur de gestion mettent en oeuvre le protocole SMTP, à l'adresse IP de ladite unité de gestion sur le port correspondant audit protocole.

Selon une autre caractéristique de l'invention, lesdites informations de gestion transmises par ledit client de service de sa propre initiative sont encapsulées dans un message structuré dit MIME.

Selon une autre caractéristique de l'invention, lesdites informations de gestion d'un télécopieur comprennent des informations de paramètres de configuration, lesdites informations de configuration étant soit des informations, dites locales, déterminées et modifiables localement au niveau dudit télécopieur, soit des informations, dites privées, transmises spécialement audit télécopieur par ladite unité de gestion et non modifiables localement, soit des informations, dites publiques, transmises à plusieurs télécopieurs par ladite unité de gestion et non modifiables localement.

Selon une autre caractéristique de l'invention, lesdites informations de gestion d'un télécopieur comprennent un répertoire de destinataires, des parties dudit répertoire étant soit des parties, dites locales, déterminées et non modifiables localement au niveau dudit télécopieur, soit des parties, dites publiques, transmises à plusieurs desdits télécopieurs par ladite unité de gestion et modifiables localement.

Selon une autre caractéristique de l'invention, une nouvelle valeur à affecter à une information de gestion qui est transmise à un télécopieur par ladite unité de gestion est préalablement cryptée, puis décryptée au niveau dudit télécopieur.

Selon une autre caractéristique de l'invention, préalablement à la transmission de ladite nouvelle valeur, ledit télécopieur transmet à ladite unité de gestion un aléa, ladite nouvelle valeur étant cryptée en utilisant une clef qui est déduite dudit aléa par un algorithme et étant transmise avec ladite clef, ledit télécopieur vérifiant avant décryptage que ladite clef correspond audit aléa préalablement transmis.

Selon une autre caractéristique de l'invention, lesdites informations de gestion sont échangées entre l'un quelconque desdits télécopieurs et ladite unité de gestion au format XML.

Selon une autre caractéristique de l'invention, pour échanger lesdites informations de gestion, chacun desdits télécopieurs et ladite unité de gestion comportent respectivement au moins un client de service et un serveur de service, d'une part, et au moins un client de gestion et serveur de gestion, d'autre part, qui mettent en oeuvre le protocole HTTP.

La présente invention concerne également un télécopieur destiné à être relié à un réseau local géré par au moins une unité de gestion, ledit télécopieur comprenant des moyens de stockage des informations de gestion dudit télécopieur, des moyens de transfert à ladite unité de gestion desdites informations de gestion et des moyens de réception desdites informations de gestion à une adresse physique et une adresse logique prédéterminée.

Selon la présente invention, il comprend des moyens d'identification émettant, préalablement à sa prise en charge par ladite unité de gestion, une trames d'identification incluant l'adresse logique et l'adresse physique dudit télécopieur.

Selon une autre caractéristique de l'invention, ladite adresse logique et ladite adresse physique sont respectivement l'adresse IP et l'adresse physique dans ledit réseau local dudit télécopieur.

Selon une autre caractéristique de l'invention, il comporte un client de service pour le transfert desdites informations de gestion vers ladite unité de gestion de sa propre initiative et des moyens pour recevoir de ladite unité de gestion l'adresse logique et le port du serveur de gestion correspondant audit client de service.

Selon une autre caractéristique de l'invention, lesdites informations de gestion transmises par ledit client de service de sa propre initiative sont des informations d'état dudit télécopieur, lesdites informations étant transmises lors du déclenchement d'une alarme.

Selon une autre caractéristique de l'invention, ledit client de service met en oeuvre le protocole SMTP, à l'adresse IP de ladite unité de gestion sur le port correspondant audit protocole.

Selon une autre caractéristique de l'invention, lesdites informations de gestion transmises par le client de service de sa propre initiative sont encapsulées dans un message structuré dit MIME.

Selon une autre caractéristique de l'invention, lesdites informations de gestion comprennent des informations de paramètres de configuration, lesdites informations étant soit des informations, dites locales, déterminées et modifiables localement au niveau dudit télécopieur, soit des informations, dites privées, transmises spécialement audit télécopieur par une unité de gestion et non modifiables localement soit des informations, dites publiques, transmises à plusieurs télécopieurs par une unité de gestion et non modifiables localement.

Selon une autre caractéristique de l'invention, lesdites informations de gestion d'un télécopieur comprennent un répertoire de destinataires, des parties dudit répertoire étant soit des parties, dites locales, déterminées et modifiables localement au niveau dudit télécopieur, soit des parties, dites publiques, transmises à plusieurs télécopieurs par ladite unité de gestion et non modifiables localement.

Selon une autre caractéristique de l'invention, il comporte des moyens de décryptage d'une nouvelle valeur à affecter auxdites informations de gestion qui sont transmises de manière cryptée par ladite unité de gestion.

Selon une autre caractéristique de l'invention, préalablement à la transmission de ladite nouvelle valeur, ledit télécopieur transmet à ladite unité de gestion un aléa, ledit télécopieur vérifiant avant décryptage que ladite clef correspond audit aléa préalablement transmis.

Selon une autre caractéristique de l'invention, lesdites informations de gestion sont transmises à ladite unité de gestion au format XML.

Selon une autre caractéristique de l'invention, il comporte au moins un client de service et un serveur de service mettant en rouvre le protocole HTTP échangeant lesdites informations de gestion,.

La présente invention concerne également une unité de gestion d'une flotte de télécopieurs reliés à un même réseau local, ladite unité de gestion étant elle-même reliée audit réseau local et comprenant des moyens de stockage des informations de gestion desdits télécopieurs, des moyens de transfert à chacun desdits télécopieurs desdites informations de gestion à son adresse physique et son adresse logique et des moyens de réception desdites informations de gestion.

Elle comporte des moyens d'identification recevant d'un télécopieur une trame d'identification incluant l'adresse logique et l'adresse physique dudit télécopieur, des moyens d'établissement d'une connexion avec un serveur de service dudit télécopieur à l'adresse logique et à l'adresse physique contenues dans ladite trame d'identification, et,
si la connexion a été établie, prenant en charge ledit télécopieur à ladite adresse logique et à ladite adresse physique et effectuant ensuite des échanges d'informations de gestion entre eux, et
si la connexion n'a pas été établie, demandant à l'utilisateur une adresse logique valide à associer à ladite adresse physique et pour ré-essayer d'établir une connexion.

Selon une autre caractéristique de l'invention, ladite adresse logique et ladite adresse physique sont respectivement l'adresse IP et l'adresse physique dans ledit réseau local dudit télécopieur concerné.

Selon une autre caractéristique de l'invention, elle comporte au moins un serveur de gestion correspondant à au moins un client de service que comporte chacun desdits télécopieur transférant lesdites informations de gestion vers l'unité de gestion de sa propre initiative, lesdits moyens d'identification de ladite unité de gestion transmettant l'adresse logique et le port dudit serveur de gestion audit télécopieur lorsque ladite connexion a été établie.

Selon une autre caractéristique de l'invention, lesdites informations de gestion transmises par le client de service de sa propre initiative sont des informations d'état dudit télécopieur, lesdites informations étant transmises lors du déclenchement d'une alarme.

Selon une autre caractéristique de l'invention, ledit serveur de gestion met en oeuvre le protocole SMPT.

Selon une autre caractéristique de l'invention, lesdites informations de gestion d'un télécopieur comprennent des informations de paramètres de configuration, lesdites informations étant soit des informations, dites locales, déterminées et modifiables localement au niveau dudit télécopieur, soit des informations, dites privées, transmises spécialement audit télécopieur par ladite unité de gestion et non modifiables localement, soit des informations, dites publiques, transmises à plusieurs desdits télécopieurs par ladite unité de gestion et non modifiables localement.

Selon une autre caractéristique de l'invention, lesdites informations de gestion d'un télécopieur comprennent un répertoire de destinataires, des parties dudit répertoire étant soit des parties, dites locales, déterminées et modifiables localement au niveau dudit télécopieur, soit des parties, dites publiques, transmises à plusieurs desdits télécopieurs par ladite unité de gestion et non modifiables localement.

Selon une autre caractéristique de l'invention, une nouvelle valeur à affecter à une information de gestion qui est transmise à un télécopieur est préalablement cryptée.

Selon une autre caractéristique de l'invention, lesdites informations de gestion sont échangées avec l'un quelconque desdits télécopieurs au format XML.

Selon une autre caractéristique de l'invention, elle comporte un client de gestion et un serveur de gestion qui mettent en oeuvre le protocole HTTP au cours de l'échange desdites informations de gestion.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 est un schéma d'un réseau local auquel sont reliés des télécopieurs ainsi qu'une unité de gestion selon la présente invention, et
La Fig. 2 est un schéma structurel d'un télécopieur et d'une unité de gestion selon la présente invention.

### DESCRIPTION DES MODES DE REALISATION PREFERES DE L'INVENTION

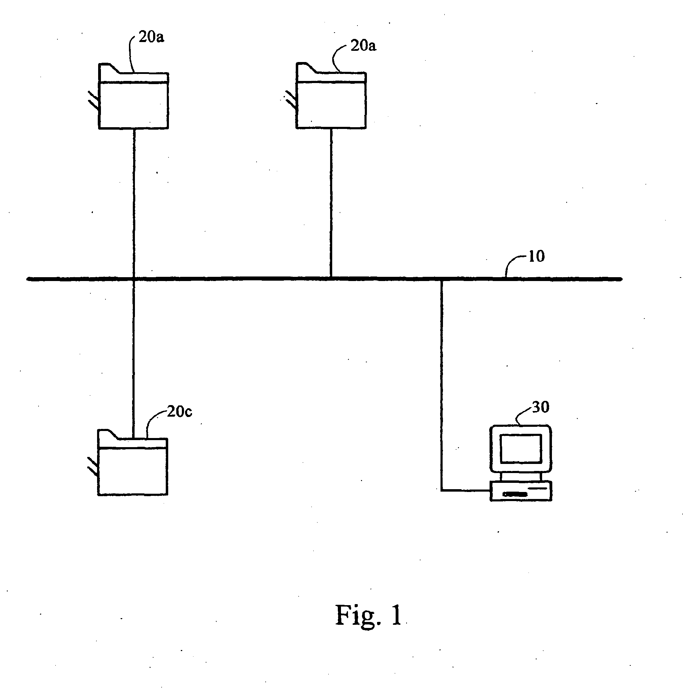

A la Fig. 1, on a représenté par un simple tiret épais, un réseau local 10 qui peut être de tout type pouvant assurer le transport de paquets, par exemple de paquets IP (Internet Protocol), encapsulés, par exemple, dans des trames Ethernet, ou des trames conformes IEEE 802.3, ou encore des trames conformes IEEE 802.5, etc. A ce réseau local 10, sont reliés par des interfaces physiques appropriées des télécopieurs 20a, 20b et 20c ainsi qu'une unité de gestion 30.

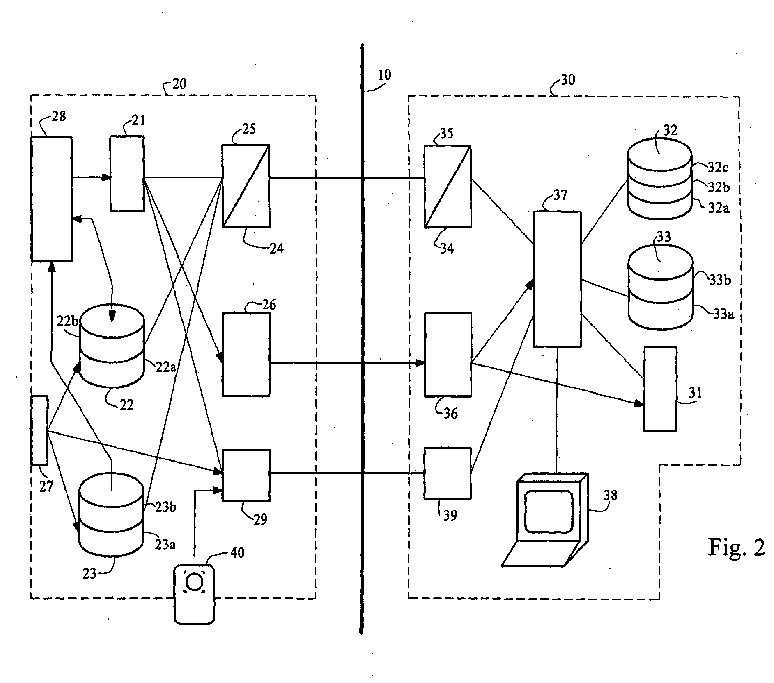

A la Fig. 2, on voit, en ce qui concerne les éléments constitutifs du système de gestion de la présente invention (au niveau des protocoles utilisateurs : couche 7 d'application du modèle ISO), un télécopieur 20 et une unité de gestion 30 pouvant se trouver en communication l'un avec l'autre par l'intermédiaire du réseau local 10.

Plus précisément, le télécopieur 20 comporte une zone de mémoire 21 dans laquelle sont stockées différentes valeurs d'état relatives à l'état du télécopieur 20. Ces valeurs peuvent concerner l'identification de la machine, la date et l'heure courante de la machine, l'état des consommables (niveau de toner, par exemple), le comptage des pages imprimées, émises, reçues, copiées localement, les différents évènements dont la machine a été actrice, l'état des différentes ressources de la machine, l'état des options, etc.

Il comporte encore une base de données 22 dans laquelle sont répertoriés les différents paramètres de configuration de la machine, notamment les paramètres liés aux fonctionnalités de communication du télécopieur tels que l'adresse IP de la machine, l'identification du serveur de nom de domaine DNS (Domain Name System : système de nom de domaine), adresse de serveur SMTP et de serveur POP3 et identifiant POP3 et mot de passe POP3 pour des fonctionnalités liées à l'émission et la réception d'e.mails, numéro de téléphone du fournisseur d'accès Internet pour les fonctionnalités d'accès à Internet via le réseau téléphonique commuté RTC, etc. Comme on le verra par la suite, la base de données 22 est scindée en deux sous-bases de données : une sous-base de données 22a relative aux paramètres de configuration, dits paramètres de configuration locaux, qui peuvent être modifiés par l'utilisateur par des moyens d'interface homme-machine 27 que comporte le télécopieur 20 et une sous-base de données 22b relative aux paramètres de configuration, dits paramètres de configuration privés ou publics selon le cas, qui ne peuvent pas être modifiés par l'utilisateur par les moyens d'interface homme-machine 27. Les paramètres de configuration sont dits privés lorsqu'ils sont propres au télécopieur 20 considéré alors qu'ils sont dits publics lorsqu'ils sont communs à plusieurs, voire tous, télécopieurs 20 d'une flotte de télécopieurs reliés au même réseau local 10.

Il comporte encore une base de données 23 formant répertoire associant au moins un identificateur d'un destinataire et son adresse de destination. On entend par adresse de destination soit le numéro téléphonique du télécopieur dudit destinataire, soit son adresse IP, soit encore son nom URL (Uniform Ressource Locator = localisateur de ressources). A l'instar de la base de données 22, la base de données 23 est scindée en deux sous-bases de données : une sous-base de données 23a relative à la partie de répertoire locale qui peut être modifiée par l'utilisateur par les moyens d'interface homme-machine 27 que comporte le télécopieur 20 et une sous-base de données 22b relative à la partie de répertoire publique, qui ne peut pas être modifiée par l'utilisateur par les moyens d'interface homme-machine 27.

Le télécopieur 20 comporte encore un serveur 24 pour le transfert de données vers l'unité de gestion 30 sous requête de cette unité de gestion 30. Le serveur 24 est par exemple un serveur http du nom du protocole de transfert qui est mis en oeuvre : HyperText Transfer Protocol = protocole de transfert d'hypertext. Il s'agit d'un protocole standardisé qui fait l'objet des demandes RFC 2616 et 1945 (RFC = Request for Comments = Demande de commentaires).

Le télécopieur 20 comporte encore un client 25 pour établir une connexion bi-directionnelle avec un serveur correspondant de l'unité de gestion 30, pour effectuer une requête d'informations et pour recueillir les informations requises. Un tel client 25 est par exemple un client http.

Le télécopieur 20 comporte encore un client 26 pour le transfert de données vers l'unité de gestion 30 de sa propre initiative. Le client 26 est par exemple un client SMTP du nom du protocole de transfert qui est mis en oeuvre : Simple Mail Transfer Protocol = protocole simple de transfert de courrier.

Enfin, le télécopieur 20 comporte les éléments de télécopieur 28 qui sont nécessaires à son fonctionnement en tant que télécopieur, à savoir un scanner, une imprimante, un modem, etc. A chaque instant, ces éléments de télécopieur 28 se trouvent dans un état qui constitue les informations d'état contenues dans la zone de mémoire 21. Ils utilisent également pour fonctionner les paramètres de configuration qui sont stockés dans la base de données 22 ainsi que les entrées dans le répertoire stocké dans la base de données 23.

L'unité de gestion 30 comporte quant à elle une zone mémoire 31 formant journal des messages d'alarme transmis par les télécopieurs 20 de la flotte via, comme on le verra par la suite, le réseau LAN 10 et un serveur 36.

Elle comporte encore une base de données 32 dans laquelle sont répertoriés les différents paramètres de configuration des télécopieurs 20 de la flotte de télécopieurs connectés au réseau LAN 10. Ces paramètres sont ceux que l'on a évoqués ci-dessus en ce qui concerne la base de données 22 d'un télécopieur 20. Plus précisément, la base de données 32 est scindée en trois sous-bases de données : une sous-base de données 32a relative à des paramètres de configuration locaux qui sont spécifiques de chaque télécopieur 20 et qui sont donc répertoriés en fonction de chaque télécopieur 20, une sous-base de données 32b relative à des paramètres de configuration privés et qui sont répertoriés en fonction de chaque télécopieur 20 et une sous-base de données 32c relative à des paramètres de configuration publics. On rappelle que les paramètres de configuration locaux peuvent être modifiés tant au niveau d'un télécopieur 20 qu'au niveau de l'unité de gestion 30, que les paramètres de configuration privés, liés à chaque télécopieur, ne peuvent être modifiés que par l'unité de gestion 30 et que les paramètres de configuration publics, communs à tous les télécopieurs 20 de la flotte, ne peuvent être modifiés que par l'unité de gestion 30.

Elle comporte encore une base de données 33 formant répertoire associant au moins à un identificateur d'un destinataire son adresse de destination. La base de données 33 est scindée en deux sous-bases de données : une sous-base de données 33a relative aux parties de répertoire locales qui sont respectivement liées et répertoriées aux télécopieurs 20 de la flotte et qui peuvent être modifiées par l'utilisateur tant au niveau des télécopieurs 20 correspondant qu'au niveau de l'unité de gestion 30 et une sous-base de données 32b relative à la partie de répertoire publique, donc non-liée à un quelconque télécopieur 20, qui ne peut pas être modifiée par l'utilisateur au niveau d'un télécopieur 20 de la flotte.

Elle comporte encore un serveur 34 pour le transfert de données vers un télécopieur 20 de la flotte de télécopieurs connectés au réseau LAN 10 et sous requête du client correspondant 25 dudit télécopieur 20. Le serveur 34 met en oeuvre le même protocole que le client 25, par exemple le protocole http.

L'unité de gestion 30 comporte encore un client 35 pour établir une connexion bi-directionnelle avec un serveur correspondant 24 d'un télécopieur 20 de la flotte de télécopieurs connectés au réseau LAN 10, pour effectuer une requête d'informations audit serveur 24 et pour recueillir ensuite les informations requises que lui transmet ledit serveur 24. Un tel client 35 met en oeuvre le même protocole que le serveur 24 qui est par exemple le protocole http.

L'unité de gestion 30 comporte encore un serveur 36 pour recevoir des données d'un client 26 d'un télécopieur 20 que celui-ci lui transmet de sa propre initiative. Le serveur 36 met en oeuvre le même protocole que le client 26, à savoir dans un exemple de réalisation, le protocole SMTP.

Elle comporte une unité de traitement 37 qui, sous la commande d'une interface homme-machine 38, est prévue pour lire les données qui sont contenues dans la zone mémoire formant journal 31, pour lire et écrire dans la base de données des paramètres de configuration 32, pour lire et écrire dans la base de données des annuaires 33, pour recevoir des données du client 35 et pour transmettre des données au serveur 34.

Chaque télécopieur 20 comporte des moyens d'identification 29 prévus pour communiquer, via le réseau LAN 10, avec des moyens correspondant d'identification 39 que comporte l'unité de gestion 30. Les moyens d'identification 39 sont reliés à l'unité de traitement 37 de l'unité de gestion. Le fonctionnement de ces moyens 29 et 39 est le suivant.

A la mise sous-tension du télécopieur 20, ou sous une commande appropriée de la part de l'utilisateur, par exemple au moyen de l'interface homme-machine 27 ou encore par l'insertion d'une carte à puce 40 prévue à cet effet, les moyens d'identification 29 émettent sur le réseau LAN, à intervalles de temps, par exemple réguliers, des trames d'identification contenant l'adresse physique du télécopieur telle que l'adresse Ethernet, l'adresse IEEE conforme aux recommandations IEEE 802.3, ou IEEE 802.5 ainsi que l'adresse IP du télécopieur 20 concerné, adresse telle qu'elle a été entrée en usine, ou manuellement par l'administrateur du réseau ou encore telle qu'elle a été obtenue par un serveur approprié du type DHCP/BOOTP. A ces informations d'identification, sont ajoutées des informations spécifiques à l'identification du télécopieur concerné telles que son numéro de série, un nom alphanumérique d'identification au sein du réseau, un nom dit nom NetBios, pris séparément ou en combinaison. Est également ajoutée à ces informations, une chaîne d'identification représentant l'unité de gestion 30, si celle-ci a déjà géré ledit télécopieur 20 ou même est en charge de sa gestion.

A la réception de cette trame d'identification, les moyens 39 transmettent les informations qu'elle contient à l'unité de traitement 37 puis à l'interface homme-machine 38 où elles sont visualisées à l'utilisateur.

Si le télécopieur 20 n'est pas déjà pris en charge par l'unité de gestion 30 (on notera que dans ce cas, la trame d'identification ne contient pas l'identification de l'unité de gestion 30), l'utilisateur peut signifier, grâce à l'interface 38, qu'il souhaite qu'il le soit. L'unité de traitement 37 commande alors le client 35 pour qu'il établisse une communication avec le serveur 24 du télécopieur en utilisant, par exemple, le protocole http et donc le port 80.

On notera que du fait que dans les trames d'identification, l'adresse IEEE soit présente avec l'adresse IP, permet d'établir une relation entre ces deux adresses. Cette relation, nécessaire au client 35 pour établir physiquement la communication, est stockée dans un cache dit cache ARP (Adress Resolution Protocol : RFC 826).

Si cette communication a pu être établie, c'est que l'adresse IP transmise par le télécopieur 20 dans la trame d'identification est cohérente avec le réseau LAN 10. Par conséquent, l'unité de traitement 37 va commander les moyens 39 de manière qu'ils communiquent au télécopieur 20, via les moyens 29, une identification de l'unité de gestion 30, par exemple une chaîne de caractères spécifique, l'adresse IP de l'unité de gestion 30, le numéro du port du serveur SMTP. Elle commandera, aussi par ce biais, le télécopieur 20 afin qu'il n'émette plus les trames d'identification.

On notera que l'adresse IP de l'unité de gestion 30, le numéro du port du serveur SMTP sont nécessaires au client 26 d'un télécopieur 20 pour communiquer avec le serveur 36 de l'unité de gestion 30.

Par contre, si la communication n'a pu être établie, cela signifie que l'adresse IP du télécopieur est nulle ou n'est pas dans le plan d'adressage du réseau LAN 10. L'utilisateur est alors convié à saisir manuellement une adresse IP au moyen de l'interface homme-machine 38. L'unité de traitement 37 va alors commander les moyens 39 pour communiquer cette adresse IP au télécopieur, adresse IP qui lui sera affectée. On notera que l'unité de gestion 30 peut faire la relation entre cette adresse IP et l'adresse IEEE du télécopieur concerné et mettre ainsi son cache ARP à jour.

Ensuite, comme dans le cas précédent, l'unité de traitement 37 va alors commander les moyens 39 de manière qu'ils communiquent au télécopieur 20, via les moyens 29, une identification de l'unité de gestion 30, l'adresse IP de l'unité de gestion 30, le numéro du port du serveur SMTP.

Si le télécopieur 20 est déjà pris en charge par l'unité de gestion 30, alors l'identificateur de l'unité de gestion 30 est présent dans les trames d'identification qu'il émet. L'unité de traitement 37 commande alors directement, sans intervention de l'utilisateur contrairement au cas précédent, les moyens 39 de manière qu'ils communiquent au télécopieur 20, via les moyens 29, l'adresse IP de l'unité de gestion 30, le numéro du port du serveur SMTP. Elle commandera, aussi par ce biais, le télécopieur 20 afin qu'il n'émette plus les trames d'identification.

On remarquera qu'alors, dans un cas comme dans l'autre, le client 26 qui connaît l'adresse IP de l'unité de gestion 30 et le numéro du port SMTP et le client 25 qui connaît également l'adresse IP de l'unité de gestion 30 et le numéro du port lié au protocole utilisé (numéro du port http = 80) sont maintenant opérationnels. Il en est de même du client 35 qui connaît l'adresse IP du télécopieur 20 (on notera qu'elle pourrait être stockée dans la base de données de paramètres 32, notamment en tant que paramètre local et donc dans la sous-base de données 32a) et le numéro de port lié au protocole utilisé (numéro du port http = 80).

Lorsqu'un télécopieur 20 a une alarme interne qui se déclenche, soit par exemple parce qu'il n'y a plus de papier dans le magasin à papier, soit également encore parce que le toner est à un niveau bas, il transmet à l'unité de gestion 30 les informations d'état qui sont contenues dans sa zone mémoire 21. Pour ce faire, ces informations sont délivrées au client 26 et transmises, via le réseau LAN 10, au serveur 36 de l'unité de gestion 30. Dans l'unité de gestion 30, ces informations sont passées à l'unité de traitement 37 pour informer l'utilisateur de l'alarme grâce à l'interface homme-machine 38. Elles sont également transmises au journal 31.

Dans un exemple de réalisation préférentiel, les informations sont encapsulées dans un message structuré conformément à la demande RFC 822 : il s'agit alors d'un message dit MIME (Multipurpose Internet Mail Extensions : extensions de courrier Internet multi-fins). Le protocole utilisé par le client 26 et le serveur 36 est le protocole SMTP. Il peut également s'agir du protocole relatif à la recommandation IUT-T T37 concernant des procédures pour le transfert de données de télécopie en mode différé sur le réseau Internet qui fait également l'objet des demandes RFC 2045 à 2048.

De plus, avantageusement, les informations d'état sont préalablement mises au format XML (Extensible Markup Language : langage à marquage extensible), langage par exemple défini dans une recommandation de W3C (Word Web Wide Consortium) du 6 octobre 2000.

L'unité de gestion 30 peut également interroger un télécopieur sur son état. Elle peut soit le faire à la demande de l'utilisateur faite au moyen de l'interface 38, soit périodiquement. Pour ce faire, une requête est transmise par le client 35 au serveur 24, lequel répond par transmission des informations d'état contenues dans la zone mémoire 21. A leur réception, le client 35 les passe à l'unité de traitement 37, pour par exemple informer l'utilisateur au moyen de l'interface homme-machine 38.

Dans un mode avantageux de la présente invention, la requête formulée par le client 35 et la réponse donnée par le serveur 24 sont respectivement une requête et une réponse conformes au protocole http. Le requête est faite à l'adresse IP et sur le port TCP : 80 du télécopieur concerné. Quant aux informations d'état, elles sont avantageusement préalablement mises au format XML.

De même, l'unité de gestion 30 peut également consulter les valeurs des paramètres de configuration d'un télécopieur. Pour ce faire, une requête est transmise par le client 35 au serveur 24, lequel répond par transmission des informations de paramètres de configuration contenues dans la base de données 22.

Dans un mode avantageux de la présente invention, la requête formulée par le client 35 et la réponse donnée par le serveur 24 sont respectivement une requête et une réponse conformes au protocole http. La requête est faite à l'adresse IP et sur le port TCP : 80 du télécopieur concerné. Les informations de paramètres de configuration sont avantageusement préalablement mises au format XML.

On notera que ces informations peuvent ne pas décrire uniquement les valeurs des paramètres de configuration mais aussi la manière de les modifier de manière cohérente en précisant par exemple leur type, l'ensemble des valeurs permises, les bornes attribuées à ces valeurs, etc. Ainsi, ces informations proposent également des modèles suivant lesquels les paramètres peuvent être modifiés. Ces modèles permettent à l'unité de gestion 30, lorsqu'elle reçoit ces informations, de présenter à l'utilisateur les paramètres et quels contrôles peuvent être faits lors de leur modification.

A la réception de ces informations de paramètres de configuration, le client 35 les passe à l'unité de traitement 37, pour par exemple permettre à l'utilisateur de les modifier et ce, au moyen de l'interface homme-machine 38. Il peut également sauvegarder ces paramètres de configuration dans la base de données 32 de l'unité de gestion.

La modification des valeurs des paramètres de configuration peut, dans un exemple préférentiel de réalisation, être sujette à un processus de sécurisation des échanges. Pour ce faire, à la réception par le télécopieur de la requête de consultation des paramètres de configuration émanant de l'unité de gestion 30, le télécopieur 20 concerné répond à cette requête en transmettant en plus des informations de paramètres de configuration un aléa dont la valeur n'est valable que pendant une durée prédéterminée. Si l'utilisateur souhaite modifier un paramètre, l'unité de traitement 37 crypte les valeurs affectées aux paramètres de configuration à modifier au moyen d'une clef qui se déduit de l'aléa par un algorithme connu de l'unité de gestion 30 ainsi que de chaque télécopieur 20 de la flotte. Le client 35 transmet une commande http qui inclura non seulement les valeurs à affecter aux paramètres de configuration à modifier cryptées mais également la clef.

A la réception par le serveur 24 du télécopieur 20, le même algorithme est mis en oeuvre et il est vérifié que la clef transmise est identique à la clef obtenue au moyen de l'aléa. Si tel est le cas, les valeurs à affecter aux paramètres de configuration à modifier sont décryptées en utilisant la clef de cryptage. Dans le cas contraire, les valeurs transmises ne sont pas prises en compte.

De manière identique, l'unité de gestion 30 peut paramétrer un ensemble de télécopieurs 20 connectés au réseau LAN 10. L'utilisateur peut créer, au niveau de l'unité de gestion 30, des sous-ensembles regroupant un certain nombre de paramètres de configuration et les stocker dans la base de données 32, et plus exactement dans la sous-base de données 32c des paramètres de configuration publics. Ces sous-ensembles sont attachés à un ou plusieurs télécopieurs 20 de la flotte. Ils sont transmis à ce ou ces télécopieurs 20 avec une information supplémentaire comme quoi ils ne peuvent être modifiés au moyen de leur interface homme-machine 27. Une modification d'un paramètre d'un sous-ensemble est répercutée sur tous les télécopieurs attachés à ce sous-ensemble.

Il est ainsi possible d'attacher à un ou plusieurs télécopieurs un sous-ensemble ou plusieurs sous-ensembles disjoints de paramètres de configuration que l'utilisateur souhaite gérer de manière globale. Tous les autres paramètres de configuration ne faisant pas partie d'un sous-ensemble de paramètres attachés à ce télécopieur et n'étant pas désignés explicitement dans la base de données 32 comme non-modifiables (n'étant en définitive pas des paramètres privés) pour ce télécopieur 20 sont modifiables au moyen de l'interface homme-machine 27 de ce télécopieur 20.

De même, l'unité de gestion 30 peut également lire et modifier le répertoire d'un télécopieur. Pour ce faire, une requête est transmise par le client 35 au serveur 24, lequel répond par transmission des informations de répertoire contenues dans la base de données 23.

Dans un mode avantageux de la présente invention, la requête formulée par le client 35 et la réponse donnée par le serveur 24 sont respectivement une requête et une réponse conformes au protocole http. Le requête est faite à l'adresse IP et sur le port TCP : 80 du télécopieur concerné. Quant aux informations de répertoire, elles sont avantageusement préalablement mises au format XML.

Ces informations de répertoire sont structurées en modèle (format des destinataires et des listes de destinataires, le nombre maximal d'entrées dans le répertoire, etc.) et contenu du répertoire lui-même.

A la réception de ces informations de répertoire, le client 35 les passe à l'unité de traitement 37, pour par exemple permettre à l'utilisateur de les visualiser et les modifier et ce, au moyen de l'interface homme-machine 38. Il peut également sauvegarder ces paramètres de configuration dans la base de données 33 de l'unité de gestion 30.

La modification du répertoire d'un télécopieur 20 peut, dans un exemple préférentiel de réalisation, être sujette à un processus de sécurisation des échanges utilisant un aléa et une clef de manière identique à celui utilisé pour la modification des paramètres de configuration.

On notera que chaque entrée du répertoire peut être désignée dans l'unité de gestion 30 comme étant non-modifiable à partir de l'interface homme-machine 27 d'un télécopieur 20 concerné.

De manière identique, l'unité de gestion 30 peut paramétrer un ensemble de télécopieurs 20 connectés au réseau LAN 10. L'utilisateur peut créer, au niveau de l'unité de gestion 30, des sous-répertoires regroupant un certain nombre d'entrées (contacts, coordonnées, etc.) et les stocker dans la base de données 33, et plus exactement dans la sous-base de données 33c des parties de répertoire publiques. Ces sous-répertoires sont attachés à un ou plusieurs télécopieurs 20 de la flotte. Ils sont transmis à ce ou ces télécopieurs 20 avec une information supplémentaire comme quoi ils ne peuvent être modifiés au moyen de leur interface homme-machine 27. Une modification d'un paramètre d'un sous-répertoire est répercutée sur tous les télécopieurs attachés à ce sous-ensemble.

Il est ainsi possible d'attacher à un ou plusieurs télécopieurs un ou plusieurs sous-répertoires que l'utilisateur souhaite gérer de manière globale. Ainsi, le répertoire d'un télécopieur 20 peut simultanément être constitué d'une partie de répertoire, dite publique, provenant de l'unité de gestion 30 et d'une partie de répertoire, dite locale, qui est saisie localement au moyen de l'interface homme-machine 27 du télécopieur.

Tous les autres paramètres de configuration ne faisant pas partie d'un sous-ensemble de paramètres attachés à ce télécopieur et n'étant pas désignés explicitement dans la base de données 32 comme non-modifiables (n'étant en définitive pas des paramètres privés) pour ce télécopieur 20 sont modifiables au moyen de l'interface homme-machine 27 de ce télécopieur 20.

## Revendications

1. Système de gestion d'une flotte de télécopieurs reliés à un même réseau local (10), ledit système comprenant an moins une unité de gestion (30) reliée audit réseau local (10), chaque télécopieur (20) comprenant des moyens de stockage (21, 22, 23) des informations de gestion dudit télécopieur, des moyens de transfert (24, 26) à ladite unité de gestion (30), desdites informations de gestion et des moyens de réception (25), desdites informations de gestion à une adresse physique et une adresse logique prédéterminée, et ladite unité de gestion (30) comprenant des moyens de stockage (31, 32, 33) d'une pluralité desdites informations de gestion desdits télécopieurs (20), des moyens de transfert (35) à un chacun desdits télécopieurs desdites informations de gestion à son adresse physique et son adresse logique et des moyens de réception (34, 36) de la pluralité desdites informations de gestion, **caractérisé en ce que** ledit système comprend encore, au niveau de chaque télécopieur (20),
des moyens d'identification (29) émettant, suite à sa mise sous tension ou à une commande de l'utilisateur, à ladite unité de gestion (30), une trame d'identification incluant l'adresse logique et l'adresse physique dudit télécopieur et au niveau de ladite unité de gestion (30),
des moyens d'identification (39) recevant dudit télécopieur ladite trame d'identification émise et,
dans le cas où ladite trame d'identification ainsi reçue ne contient pas l'identification de ladite unité de gestion (30) et dans le cas où l'adresse logique de ladite trame d'identification est dans le plan d'adressage dudit réseau local, lesdits moyens d'identification (39) émettent audit télécopieur l'adresse logique de ladite unité de gestion (30) et une identification de ladite unité de gestion (30) afin que ledit télécopieur n'émette plus de trame d'identification tant qu'il reste sous tension ou tant que l'utilisateur ne commande pas la ré-émission de la trame d'identification dudit télécopieur,
dans le cas où ladite trame d'identification ainsi reçue ne contient pas l'identification de ladite unité de gestion (30) et dans le cas où l'adresse logique de ladite trame d'identification est nulle ou n'est pas dans le plan d'adressage du.dit réseau local, des moyens (38) demandant à l'utilisateur une adresse logique valide, à associer à ladite adresse physique, lesdits moyens d'identification (39) émettant alors audit télécopieur ladite adresse logique valide, l'adresse logique de ladite unité de gestion (30) et une identification de ladite unité de gestion (30) afin que ledit télécopieur n'émette plus de trame d'identification tant qu'il reste sous tension ou tant que l'utilisateur ne commande pas la ré-émission de la trame d'identification dudit télécopieur, dans le cas où ladite trame d'identification ainsi reçue contient l'identification de ladite unité de gestion (30) lesdits moyens d'identification (39) émettent audit télécopieur l'adresse logique de ladite unité de gestion (30) afin que ledit télécopieur n'émette plus de trame d'identification tant qu'il reste sous tension ou tant que l'utilisateur ne commande pas la ré-émission de la trame d'identification dudit télécopieur,
des informations de gestion pouvant alors être échangées entre ladite unité de gestion et ledit télécopieur.

2. Système de gestion d'une flotte de télécopieurs selon la revendication 1, **caractérisé en ce que** ladite adresse logique et ladite adresse physique sont respectivement l'adresse IP et l'adresse physique dans ledit réseau local dudit télécopieur.

3. Système de gestion d'une flotte de télécopieurs selon l'une des revendications 1 à 2, **caractérisé en ce que** chaque télécopieur comporte un client de service transférant des informations de gestion vers l'unité de gestion de sa propre initiative et **en ce que** ladite unité de gestion comporte un serveur de gestion correspondant, lesdits moyens d'identification de ladite unité de gestion transmettant l'adresse logique et le port dudit serveur de gestion audit télécopieur lorsque ladite connexion a pu être établie.

4. Système de gestion d'une flotte de télécopieurs selon la revendication 3, **caractérisé en ce que** lesdites informations de gestion transmises par ledit client de service de sa propre initiative sont des informations d'état dudit télécopieur, lesdites informations étant transmises lors du déclenchement d'une alarme.

5. Système de gestion d'une flotte de télécopieurs selon la revendication 3 ou 4, **caractérisé en ce que** ledit client de service et ledit serveur de gestion mettent en oeuvre le protocole SMTP, à l'adresse JP de ladite unité de gestion sur le P9rt correspondant audit protocole.

6. Système de gestion d'une flotte de télécopieurs selon la revendication 5, **caractérisé en ce que** lesdites informations de gestion transmises par ledit client de service de sa propre initiative sont encapsulées dans un message structuré dit MIME.

7. Système de gestion d'une flotte de télécopieurs selon une des revendications précédentes, **caractérisé en ce que** lesdites informations de gestion d'un télécopieur comprennent des informations de paramètres de configuration, lesdites informations de configuration étant soit des informations, dites locales, déterminées et modifiables localement an niveau dudit télécopieur, soit des informations, dites privées, transmises spécialement audit télécopieur par ladite unité de gestion et non modifiables localement, soit des informations, dites publiques, transmises à plusieurs télécopieurs par ladite unité de gestion et non modifiables localement.

8. Système de gestion d'une flotté de télécopieurs selon une des revendications précédentes, **caractérisé en ce que** lesdites informations de gestion d'un télécopieur comprennent un répertoire de destinataires, des parties dudit répertoire étant soit des parties, dites locales, déterminées et modifiables localement au niveau dudit télécopieur, soit des parties, dites publiques, transmises à plusieurs desdits télécopieurs par ladite unité de gestion et non modifiables localement.

9. Système de gestion d'une flotte de télécopieurs selon une des revendications précédentes, **caractérisé en ce qu'**une nouvelle valeur à affecter à une information de gestion qui est transmise à un télécopieur par ladite unité de gestion est préalablement cryptée, puis décryptée au niveau dudit télécopieur.

10. Système de gestion d'une flotte de télécopieurs selon la revendication 9, **caractérisé en ce que** préalablement à la transmission de ladite nouvelle valeur ledit télécopieur transmet à ladite unité de gestion un aléa, ladite nouvelle valeur étant cryptée en utilisant une clef qui est déduite dudit aléa par un algorithme et étant transmise avec ladite clef, ledit télécopieur vérifiant avant décryptage que ladite clef correspond audit aléa préalablement transmis.

11. Système de gestion d'une flotte de télécopieurs selon une des revendications précédentes, **caractérisé en ce que** lesdites informations de gestion sont échangées entre l'un quelconque desdits télécopieurs et ladite unité de gestion au format XML.

12. Système de gestion d'une flotte de télécopieurs selon une des revendications précédentes, **caractérisé en ce que** pour échanger lesdites informations de gestion, chacun des dits télécopieurs et ladite unité de gestion comportent respectivement au moins un client de service et un serveur de service, d'une part, et au moins un client de gestion et serveur de gestion d'autre part, qui mettent en oeuvre le protocole HTI'P.

13. Télécopieur destiné à être relié à un réseau local géré par au moins une unité de gestion (30), ledit télécopieur comprenant des moyens de stockage (21, 22, 23) des informations de gestion dudit télécopieur (20), des moyens de transfert (24, 26) à ladite unité de gestion (30) desdites informations de gestion et des moyens de réception (25) desdites intonations de gestion à une adresse physique et une adresse logique prédéterminée, **caractérisé en ce qu'**il comprend des moyens d'identification (29) émettant, suite à sa mise sous tension ou à une commande de l'utilisateur, à ladite unité de gestion (30), une trame d'identification incluant l'adresse logique et l'adresse physique dudit télécopieur.

14. Télécopieur selon la revendication 13, **caractérisé en ce que** ladite adresse logique et ladite adresse physique sont respectivement l'adresse JP et l'adresse physique dans ledit réseau local dudit télécopieur.

15. Télécopieur selon la revendication 13 ou 14, **caractérisé en ce qu'**il comporte un client de service pour le transfert des dites informations de gestion vers ladite unité de gestion de sa propre initiative et des moyens pour recevoir de ladite unité de gestion l'adresse logique et le port du serveur de gestion correspondant audit client de service.

16. Télécopieur selon la revendication 15, **caractérisé en ce que** lesdites informations de gestion, transmises par ledit client de service de sa propre initiative, sont des informations d'état dudit télécopieur, lesdites informations étant transmises lors du déclenchement d'une alarme.

17. Télécopieur selon la revendication 15 ou 16, **caractérisé en ce que** ledit client de service met en oeuvre le protocole SMTP, à l'adresse IP de ladite unité de gestion sur le port correspondant audit protocole.

18. Télécopieur selon la revendication 17, **caractérisé en ce que** lesdites informations de gestion transmises par le client de service de sa propre initiative, sont encapsulées dans un message structuré dit MIME.

19. Télécopieur selon une des revendications 13 à 18 **caractérisé en ce que** lesdites informations de gestion comprennent des informations de paramètres de configuration, lesdites informations étant soit des informations, dites locales, déterminées et modifiables localement au niveau dudit télécopieur, soit des informations dites privées, transmises spécialement audit télécopieur par une unité de gestion et non modifiables localement, soit des informations dites publiques, transmises à plusieurs télécopieurs par une unité de gestion et non modifiables localement.

20. Télécopieur selon une des revendications 13 à 19, **caractérisé en ce que** lesdites informations de gestion d'un télécopieur comprennent un répertoire de destinataires, des parties dudit répertoire étant soit des parties, dites locales, déterminées et modifiables localement au niveau dudit télécopieur, soit des parties, dites publiques, transmises à plusieurs télécopieurs par ladite unité de gestion et non modifiables localement.

21. Télécopieur selon une des revendications précédentes **caractérisé en ce qu'**il comporte des moyens de décryptage d'une nouvelle valeur à affecter auxdites informations de gestion qui sont transmises de manière cryptée par ladite unité de gestion.

22. Télécopieur selon la revendication 21, **caractérisé en ce que** préalablement à la transmission de ladite nouvelle valeur, ledit télécopieur transmet à ladite unité de gestion un aléa, ledit télécopieur vérifiant avant décryptage que ladite clef correspond audit aléa préalablement transmis.

23. Télécopieur selon une des revendications 13 à 22, **caractérisé en ce que** lesdites informations de gestion sont transmises à ladite unité de gestion au format XML.

24. Télécopieur selon une des revendications 13 à 23, **caractérisé en ce qu'**il comporte au moins un client de service et un serveur de service mettant en oeuvre le protocole HITP échangeant lesdites informations de gestion.

25. Unité de gestion d'une flotte de télécopieurs reliés à un même réseau local (10), ladite unité de gestion étant elle-même reliée audit réseau local et comprenant des moyens de stockage (31, 32, 33) des informations de gestion desdits télécopieurs, des moyens de transfert (35) à chacun desdits télécopieur desdits informations de gestion à son adresse physique et son adresse logique et des moyens de réception (34, 36) desdites informations de gestion, **caractérisée en ce que** ladite unité de gestion comporte des moyens d'identification (39) recevant dudit télécopieur une trame d'identification incluant l'adresse logique et l'adresse physique dudit télécopieur, et, dans le cas où ladite trame d'identification ainsi reçue ne contient pas identification de ladite unité de gestion (30) et dans le cas où l'adresse logique de ladite trame d'identification est dans le plan d'adressage dudit réseau local, lesdits
moyens d'identification (39) émettent audit télécopieur l'adresse logique de ladite unité de gestion (30) et une identification de ladite unité de gestion afin que ledit télécopieur n'émette plus de trame d'identification tant qu'il reste sous tension ou tant que .l'utilisateur ne commande pas la ré-émission de la trame d'identification dudit télécopieur,
dans le cas où ladite trame d'identification ainsi reçue ne contient pas l'identification de ladite unité de gestion (30) et dans le cas où P adresse logique de la trame d'identification est nulle ou n'est pas dans le plan d'adressage dudit réseau local, des moyens (38) demandant à l'utilisateur une adresse logique valide à associer à ladite adresse physique, lesdits moyens d'identification (39) émettant alors audit télécopieur ladite adresse logique valide, l'adresse logique de ladite unité de gestion (30), et une identification de ladite unité de gestion afin que ledit télécopieur n'émette plus de trame d'identification tant qu'il reste sous tension ou tant que l'utilisateur ne commande pas la ré-émission de la trame d'identification dudit télécopieur,
dans le cas où ladite trame d'identification ainsi reçue contient l'identification de ladite unité de gestion (30), lesdits moyens d'identification (39) émettent audit télécopieur l'adresse logique de ladite unité de gestion (30) afin que ledit télécopieur n'émette plus de trame d'identification tant qu'il reste sous tension ou tant que l'utilisateur ne commande pas la ré-émission de la trame d'identification dudit télécopieur,
des informations de gestion pouvant alors être échangées entre ladite unité de gestion et ledit télécopieur.

26. Unité de gestion d'une flotte de télécopieurs selon la revendication 25, **caractérisée en ce que** ladite adresse logique et ladite adresse physique sont respectivement l'adresse IP et l'adresse physique dans ledit réseau local dudit télécopieur concerné.

27. Unité de gestion d'une flotte de télécopieurs selon l'une des revendications 25 à 26, **caractérisée en ce qu'**elle comporte au moins un serveur de gestion correspondant à au moins un client de service que comporte chacun desdits télécopieurs transférant lesdites informations de gestion vers l'unité de gestion de sa propre initiative, lesdits moyens d'identification de ladite unité de gestion transmettant l'adresse logique et le port dudit serveur de gestion audit télécopieur lorsque ladite connexion a été établie.

28. Unité de gestion d'une flotte de télécopieurs selon la revendication 27, **caractérisée en ce que** lesdites informations de gestion, transmises par le client de service de sa propre initiative sont des informations d'état dudit télécopieur, lesdites informations étant transmises lors du déclenchement d'une alarme.

29. Unité de gestion d'une flotte de télécopieurs selon la revendication 21 ou 28, **caractérisée en ce que** ledit serveur de gestion met en oeuvre le protocole SMTP.

30. Unité de gestion d'une flotte de télécopieurs selon une des revendications 25à 29, **caractérisée en ce que** lesdites informations de gestion d'un télécopieur comprennent des informations de paramètres de configuration lesdites informations étant soit des informations, dites locales, déterminées et modifiables localement au niveau dudit télécopieur, soit des informations, dites privées, transmises spécialement audit télécopieur par ladite unité de gestion et non modifiables localement, soit des informations, dites publiques, transmises à plusieurs des dits télécopieurs par ladite unité de gestion et non modifiables localement.

31. Unité de gestion d'une flotte de télécopieurs selon une des revendications 25 à 30, **caractérisée en ce que** lesdites informations de gestion d'un télécopieur comprennent un répertoire de destinataires, des parties dudit répertoire étant soit des parties, dites locales, déterminées et modifiables localement au niveau dudit télécopieur, soit des parties, dites publiques, transmises à plusieurs desdits télécopieurs par ladite unité de gestion et non modifiables localement.

32. Unité de gestion d'une flotte de télécopieurs selon une des revendications 25 à 31 **caractérisée en ce qu'**une nouvelle valeur à affecter à une information de gestion qui est transmise à un télécopieur est préalablement cryptée.

33. Unité de gestion d'une flotte de télécopieurs selon une des revendications 25 à 32, **caractérisée en ce que** lesdites informations de gestion sont échangées avec l'un quelconque desdits télécopieurs au format XML.

34. Unité de gestion d'une flotte de télécopieurs selon une des revendications 25 à 33, **caractérisée en ce qu'**elle comporte un client de gestion et un serveur de gestion qui mettent en oeuvre le protocole HTTP au cours de l'échange des dites informations de gestion.

## Claims

1. System for managing a plurality of facsimile machines connected to the same local network (10), said system comprising at least one managing unit (30) connected to said local network (10), each facsimile machine (20) comprising means (21, 22, 23) for storing the management data of said facsimile machine, means (24, 26) for transferring said management data to said managing unit (30), and means (25) for receiving said management data at a physical address and a predetermined logic address, and said managing unit (30) comprising means (31, 32, 33) for storing a plurality of said management data of said facsimile machines (20), means (35) for transferring to each of said facsimile machines said management data at their physical address and logic address and means (34, 36) for receiving the plurality of said management data,
**characterised in that** the system further comprises,
at each facsimile machine (20),
identification means (29) which, after being powered up or at the command of the user, send to said managing unit (30) an identification screen including the logic address and physical address of said facsimile machine and,
at said managing unit (30),
identification means (39) receiving, from said facsimile machine, said identification screen sent, and,
in the event that the identification screen thus received does not contain the identification of said managing unit (30) and in the event that the logic address of said identification screen is in the addressing plane of said local network, said identification means (39) send said facsimile machine the logic address of said managing unit (30) and an identification of said managing unit (30), so that the facsimile machine does not send any further identification screen as long as it is live or as long as the user does not order the resending of the identification screen of said facsimile machine,
in the event that the identification screen thus received does not contain the identification of said managing unit (30) and in the event that the logic address of said identification screen is zero or is not in the addressing plane of said local network, means (38) asking the user for a valid logic address, to be associated with said physical address, in which case said identification means (39) send said facsimile machine the valid logic address, the logic address of said managing unit (30) and an identification of said managing unit (30), so that the facsimile machine does not send any further identification screen as long as it is live or as long as the user does not order the resending of the identification screen of said facsimile machine,
in the event that said identification screen thus received contains the identification of said managing unit (30), said identification means (39) send said facsimile machine the logic address of said managing unit (30), so that the facsimile machine does not send any further identification screen as long as it is live or as long as the user does not order the resending of the identification screen of said facsimile machine,
then management data can be exchanged between said managing unit and said facsimile machine.

2. System for managing a plurality of facsimile machines according to claim 1, **characterised in that** said logic address and said physical address are, respectively, the IP address and the physical address in said local network of said facsimile machine.

3. System for managing a plurality of facsimile machines according to one of claims 1 and 2, **characterised in that** each facsimile machine comprises a service client transferring management data to the managing unit on its own initiative and **in that** said managing unit comprises a corresponding managing server, said identification means of said managing unit sending the logic address and the port of said managing server to said facsimile machine when said connection has been able to be made.

4. System for managing a plurality of facsimile machines according to claim 3, **characterised in that** said management data sent by said service client on its own initiative are data as to the state of said facsimile machine, said data being sent when an alarm is triggered.

5. System for managing a plurality of facsimile machines according to claim 3 or 4, **characterised in that** said service client and said managing server operate the SMTP protocol, at the IP address of said managing unit on the port corresponding to said protocol.

6. System for managing a plurality of facsimile machines according to claim 5, **characterised in that** said management data sent by said service client on its own initiative are encapsulated in a structured message known as MIME.

7. System for managing a plurality of facsimile machines according to one of the preceding claims, **characterised in that** said management data of a facsimile machine comprise data relating to configuration parameters, said configuration data being either so-called local data, determined and modifiable locally at the facsimile machine, or so-called private data sent specially to said facsimile machine by said managing unit and not modifiable locally, or so-called public data sent to a plurality of facsimile machines by said managing unit and not modifiable locally.

8. System for managing a plurality of facsimile machines according to one of the preceding claims, **characterised in that** said management data of a facsimile machine comprise a directory of addressees, parts of said directory being either so-called local parts, determined and, modifiable locally at the facsimile machine, or so-called public parts sent to a plurality of facsimile machines by said managing unit and not modifiable locally.

9. System for managing a plurality of facsimile machines according to one of the preceding claims, **characterised in that** a new value to be assigned to an item of management data which is sent to a facsimile machine by said managing unit is encrypted beforehand, then decrypted at said facsimile machine.

10. System for managing a plurality of facsimile machines according to claim 9, **characterised in that** prior to the sending of said new value, said facsimile machine sends said managing unit a random item, said new value being encrypted using a key which is deduced from said random item by an algorithm and transmitted with said key, said facsimile machine verifying, before decrypting, that said key corresponds to said random item sent previously.

11. System for managing a plurality of facsimile machines according to one of the preceding claims, **characterised in that** said management data are exchanged between any one of said facsimile machines and said managing unit in the XML format.

12. System for managing a plurality of facsimile machines according to one of the preceding claims, **characterised in that** in order to exchange said management data, each of said facsimile machines and said managing unit comprise, respectively, at least one service client and a service server, on the one hand, and at least one managing client and managing server, on the other hand, that run the HTTP protocol.

13. Facsimile machine intended to be connected to a local network managed by at least one managing unit (30), said facsimile machine comprising means (21, 22, 23) for storing the management data of said facsimile machine (20), means (24, 26) for transferring said management data to said managing unit (30), and means (25) for receiving said management data at a physical address and a predetermined logic address, **characterised in that** it comprises identification means (29) which, after being powered up or at the command of the user, send to said managing unit (30) an identification screen including the logic address and physical address of said facsimile machine.

14. Facsimile machine according to claim 13, **characterised in that** said logic address and said physical address are, respectively, the IP address and physical address in said local network of said facsimile machine.

15. Facsimile machine according to claim 13 or 14, **characterised in that** it comprises a service client for transferring said management data to said managing unit on its own initiative and means for receiving, from said managing unit, the logic address and the port of the managing server corresponding to said service client. #

16. Facsimile machine according to claim 15, **characterised in that** said management data sent by said service client on its own initiative are data as to the state of said facsimile machine, said data being sent when an alarm is triggered.

17. Facsimile machine according to claim 15 or 16, **characterised in that** said service client implements the SMTP protocol, at the IP address of said managing unit on the port corresponding to said protocol.

18. Facsimile machine according to claim 17, **characterised in that** said management data sent by the service client on its own initiative are encapsulated in a structured message known as MIME.

19. Facsimile machine according to one of claims 13 to 18, **characterised in that** said management data comprise data relating to configuration parameters, said data being either so-called local data, determined and modifiable locally at the facsimile machine, or so-called private data sent specially to said facsimile machine by a managing unit and not modifiable locally, or so-called public data sent to a plurality of facsimile machines by a managing unit and not modifiable locally.

20. Facsimile machine according to one of claims 13 to 19, **characterised in that** said management data of a facsimile machine comprise a directory of addressees, parts of said directory being either so-called local parts, determined and modifiable locally at the facsimile machine, or so-called public parts sent to a plurality of facsimile machines by said managing unit and not modifiable locally.

21. Facsimile machine according to one of the preceding claims, **characterised in that** it comprises means for decrypting a new value to be assigned to said management data which are sent in encrypted form by said managing unit.

22. Facsimile machine according to claim 21, **characterised in that** prior to the sending of said new value, said facsimile machine sends said managing unit a random item, said facsimile machine verifying, before decrypting, that said key corresponds to said random item sent previously.

23. Facsimile machine according to one of claims 13 to 22, **characterised in that** said management data are sent to said managing unit in the XML format.

24. Facsimile machine according to one of claims 13 to 23, **characterised in that** it comprises at least one service client and a service server, implementing the HTTP protocol exchanging said management data.

25. Managing unit for a plurality of facsimile machines connected to the same local network (10), said managing unit itself being connected to said local network, and comprising means (31, 32, 33) for storing management data of said facsimile machines, means (35) for transferring to each of said facsimile machines said management data at their physical address and logic address and means (34, 36) for receiving said management data,
**characterised in that** said managing unit comprises identification means (39) receiving, from said facsimile machine, an identification screen including the logic address and physical address of said facsimile machine and,
in the event that the identification screen thus received does not contain the identification of said managing unit (30) and in the event that the logic address of said identification screen is in the addressing plane of said local network, said identification means (39) send said facsimile machine the logic address of said managing unit (30) and an identification of said managing unit, so that the facsimile machine does not send any further identification screen as long as it is live or as long as the user does not order the resending of the identification screen of said facsimile machine,
in the event that the identification screen thus received does not contain the identification of said managing unit (30) and in the event that the logic address of said identification screen is zero or is not in the addressing plane of said local network, means (38) asking the user for a valid logic address to be associated with said physical address, said identification means (39) then sending said facsimile machine said valid logic address, the logic address of said managing unit (30) and an identification of said managing unit, so that the facsimile machine does not send any further identification screen as long as it is live or as long as the user does not order the resending of the identification screen of said facsimile machine,
in the event that said identification screen thus received contains the identification of said managing unit (30), said identification means (39) send said facsimile machine the logic address of said managing unit (30), so that the facsimile machine does not send any further identification screen as long as it is live or as long as the user does not order the resending of the identification screen of said facsimile machine,
then management data can be exchanged between said managing unit and said facsimile machine.

26. Managing unit for a plurality of facsimile machines according to claim 25, **characterised in that** said logic address and said physical address are, respectively, the IP address and the physical address in said local network of said facsimile machine in question.

27. Managing unit for a plurality of facsimile machines according to one of claims 25 and 26, **characterised in that** it comprises at least one managing server corresponding to at least one service client contained in each of said facsimile machines transferring said management data to the managing unit on their own initiative, said identification means for said managing unit transmitting the logic address and the port of said managing server to said facsimile machine when said connection has been established.

28. Managing unit for a plurality of facsimile machines according to claim 27, **characterised in that** said management data, sent by the service client on its own initiative, are data as to the state of said facsimile machine, said data being sent when an alarm is triggered.

29. Managing unit for a plurality of facsimile machines according to claim 27 or 28, **characterised in that** said managing server implements the SMTP protocol.

30. Managing unit for a plurality of facsimile machines according to one of claims 25 to 29, **characterised in that** said management data of a facsimile machine comprise data relating to configuration parameters, said data being either so-called local data, determined and modifiable locally at the facsimile machine, or so-called private data sent specially to said facsimile machine by said managing unit and not modifiable locally, or so-called public data sent to a plurality of facsimile machines by said managing unit and not modifiable locally.

31. Managing unit for a plurality of facsimile machines according to one of claims 25 to 30, **characterised in that** said management data of a facsimile machine comprise a directory of addressees, parts of said directory being either so-called local parts, determined and modifiable locally at the facsimile machine, or so-called public parts sent to a plurality of facsimile machines by said managing unit and not modifiable locally.

32. Managing unit for a plurality of facsimile machines according to one of claims 25 to 31, **characterised in that** a new value to be assigned to an item of management data which is sent to a facsimile machine is encrypted beforehand.

33. Managing unit for a plurality of facsimile machines according to one of claims 25 to 32, **characterised in that** said management data are exchanged with any one of said facsimile machines in the XML format.

34. Managing unit for a plurality of facsimile machines according to one of claims 25 to 33, **characterised in that** it comprises a managing client and a managing server which implement the HTTP protocol in the course of the exchange of said management data.

## Patentansprüche

1. System zur Verwaltung einer Gruppe von Fernkopierern, die mit demselben lokalen Netzwerk (10) verbunden sind, wobei das System mindestens eine Verwaltungseinheit (30) umfasst, die mit dem lokalen Netzwerk (10) verbunden ist, wobei jeder Fernkopierer (20) Mittel (21, 22, 23) zur Speicherung der Verwaltungsinformationen des Fernkopierers, Mittel (24, 26) zur Übermittlung der Verwaltungsinformationen an die Verwaltungseinheit (30) und Mittel (25) zum Empfang der Verwaltungsinformationen an einer physikalischen Adresse und einer vorgegebenen logischen Adresse aufweist und wobei die Verwaltungseinheit (30) Mittel (31, 32, 33) zur Speicherung mehrerer Verwaltungsinformationen der Fernkopierer (20), Mittel (35) zur Übermittlung der Verwaltungsinformationen an jeden Fernkopierer an seine physikalische Adresse und seine logische Adresse sowie Mittel (34, 36) zum Empfang der mehreren Verwaltungsinformationen aufweist,
**dadurch gekennzeichnet, dass** das System außerdem für jeden Fernkopierer (20) Folgendes aufweist:
Kennungsmittel (29), die nach ihrem Einschalten oder nach einem Befehl des Benutzers an die Verwaltungseinheit (30) einen Kennungsrahmen aussenden, der die logische Adresse und die physikalische Adresse des Fernkopierers aufweisen, und bei der Verwaltungseinheit (30),
Kennungsmittel (39), die von dem Fernkopierer den gesendeten Kennungsrahmen empfangen, und
falls der auf diese Weise empfangene Kennungsrahmen nicht die Kennung der Verwaltungseinheit (30) enthält und falls die logische Adresse des Kennungsrahmens sich in dem Adressierungsplan des lokalen Netzwerkes befindet, senden die Kennungsmittel (39) die logische Adresse der Verwaltungseinheit (30) und eine Kennung der Verwaltungseinheit (30) an den Fernkopierer, damit der Fernkopierer keinen Kennungsrahmen mehr sendet, solange er eingeschaltet ist oder solange der Benutzer nicht das erneute Senden des Kennungsrahmens des Fernkopierers befiehlt,
falls der auf diese Weise empfangene Kennungsrahmen nicht die Kennung der Verwaltungseinheit (30) enthält und falls die logische Adresse des Kennungsrahmens null ist oder sich nicht in dem Adressierungsplan des lokalen Netzwerkes befindet, Mittel (38), die von dem Benutzer eine gültige logische Adresse verlangen, die mit der physikalischen Adresse verknüpft werden muss, wobei die Kennungsmittel (39) dann die gültige logische Adresse, die logische Adresse der Verwaltungseinheit (30) und eine Kennung der Verwaltungseinheit (30) an den Fernkopierer senden, damit der Fernkopierer keinen Kennungsrahmen mehr sendet, solange er eingeschaltet bleibt oder solange der Benutzer nicht das erneute Senden des Kennungsrahmens des Fernkopierers befiehlt, falls der auf diese Weise empfangene Kennungsrahmen die Kennung der Verwaltungseinheit (30) enthält, senden die Kennungsmittel (39) die logische Adresse der Verwaltungseinheit (30) an den Fernkopierer, damit der Fernkopierer keinen Kennungsrahmen mehr sendet, solange er eingeschaltet bleibt oder solange der Benutzer nicht das erneute Senden des Kennungsrahmens des Fernkopierers befiehlt,
Verwaltungsinformationen, die dann zwischen der Verwaltungseinheit und dem Fernkopierer ausgetauscht werden können,

2. System zur Verwaltung einer Gruppe von Fernkopierern nach Anspruch 1, **dadurch gekennzeichnet, dass** die logische Adresse und die physikalische Adresse die IP-Adresse beziehungsweise die physikalische Adresse in dem lokalen Netzwerk des Fernkopierers sind.

3. System zur Verwaltung einer Gruppe von Fernkopierern nach einem der Ansprüche 1 bis 2, **dadurch gekennzeichnet, dass** jeder Fernkopierer einen Service-Client aufweist, der aus eigener Initiative Verwaltungsinformationen an die Verwaltungseinheit übermittelt, und dass die Verwaltungseinheit einen entsprechenden Verwaltungsserver aufweist, wobei die Kennungsmittel der Verwaltungseinheit die logische Adresse und den Port des Verwaltungsservers an den Fernkopierer übermitteln, wenn die Verbindung hergestellt werden konnte.

4. System zur Verwaltung einer Gruppe von Fernkopierern nach Anspruch 3, **dadurch gekennzeichnet, dass** die Verwaltungsinformationen, die auf eigene Initiative von dem Service-Client übermittelt werden, Zustandsinformationen über den Fernkopierer sind, wobei die Informationen bei dem Auslösen eines Alarmsignals übermittelt werden.

5. System zur Verwaltung einer Gruppe von Fernkopierern nach Anspruch 3 oder 4, **dadurch gekennzeichnet, dass** der Service-Client und der Verwaltungsserver das SMTP-Protokoll an der JP-Adresse der Verwaltungseinheit an dem dem Protokoll entsprechenden Port implementieren.

6. System zur Verwaltung einer Gruppe von Fernkopierern nach Anspruch 5, **dadurch gekennzeichnet, dass** die Verwaltungsinformationen, die auf eigene Initiative von dem Service-Client übermittelt werden, in einer strukturierten, sogenannten MIME-Nachricht eingeschlossen sind.

7. System zur Verwaltung einer Gruppe von Fernkopierern nach einem der vorhergehenden Ansprüche, **dadurch gekennzeichnet, dass** die Informationen zur Verwaltung eines Fernkopierers Informationen über Konfigurationsparameter aufweisen, wobei die Konfigurationsinformationen entweder sogenannte lokale Informationen sind, die bei dem Fernkopierer festgelegt werden und lokal veränderbar sind, oder sogenannte private Informationen, die von der Verwaltungseinheit speziell an den Fernkopierer übermittelt werden und lokal nicht veränderbar sind, oder sogenannte öffentliche Informationen, die von der Verwaltungseinheit an mehrere Fernkopierer übermittelt werden und lokal nicht veränderbar sind.

8. System zur Verwaltung einer Gruppe von Fernkopierern nach einem der vorhergehenden Ansprüche, **dadurch gekennzeichnet, dass** die Informationen zur Verwaltung eines Fernkopierers ein Verzeichnis von Empfängern umfassen, wobei Teile des Verzeichnisses entweder sogenannte lokale Teile sind, die bei dem Fernkopierer festgelegt werden und lokal veränderbar sind, oder sogenannte öffentliche Teile, die von der Verwaltungseinheit an mehrere Fernkopierer übermittelt werden und nich die lokal veränderbar sind.

9. System zur Verwaltung einer Gruppe von Fernkopierern nach einem der vorhergehenden Ansprüche, **dadurch gekennzeichnet, dass** ein neuer Wert, der einer Verwaltungsinformation, die an von der Verwaltungseinheit an einen Fernkopierer übermittelt wird, zugeordnet werden soll, vorher verschlüsselt, dann bei dem Fernkopierer entschlüsselt wird.

10. System zur Verwaltung einer Gruppe von Fernkopierern nach Anspruch 9, **dadurch gekennzeichnet, dass** der Fernkopierer vor der Übermittlung des neuen Wertes eine Zufallszahl an die Verwaltungseinheit übermittelt, wobei der neue Wert verschlüsselt wird, indem ein Schlüssel verwendet wird, der durch einen Algorithmus von der Zufallszahl abgeleitet und mit dem Schlüssel übermittelt wird, wobei der Fernkopierer vor der Entschlüsselung überprüft, ob der Schlüssel der vorher übermittelten Zufallszahl entspricht.

11. System zur Verwaltung einer Gruppe von Fernkopierern nach einem der vorhergehenden Ansprüche, **dadurch gekennzeichnet, dass** die Verwaltungsinformationen zwischen einem beliebigen Fernkopierer und der Verwaltungseinheit im XML-Format ausgetauscht werden.

12. System zur Verwaltung einer Gruppe von Fernkopierern nach einem der vorhergehenden Ansprüche, **dadurch gekennzeichnet, dass** jeder der Fernkopierer und die Verwaltungseinheit, um die Verwaltungsinformationen auszutauschen, einerseits jeweils mindestens einen Service-Client und einen Verwaltungsserver und andererseits mindestens einen Verwaltungsclient und einen Verwaltungsserver, die das HTTP-Protokoll implementieren, aufweisen.

13. Fernkopierer, der mit einem lokalen Netzwerk verbunden werden soll, das von mindestens einer Verwaltungseinheit (30) verwaltet wird, wobei der Fernkopierer Mittel (21, 22, 23) zur Speicherung von Verwaltungsinformationen des Fernkopierers (20), Mittel (24, 26) zur Übermittlung der Verwaltungsinformationen an die Verwaltungseinheit (30) und Mittel (25) zum Empfang der Verwaltungsinformationen an einer physikalischen Adresse und einer vorgegebenen logischen Adresse aufweist, **dadurch gekennzeichnet, dass** er Kennungsmittel (29) aufweist, die nach seiner Einschaltung oder nach einem Befehl des Benutzers an die Verwaltungseinheit (30) einen Kennungsrahmen sendet, der die logische Adresse und die physikalische Adresse des Fernkopierers aufweist.

14. Fernkopierer nach Anspruch 13, **dadurch gekennzeichnet, dass** die logische Adresse und die physikalische Adresse jeweils die IP-Adresse und die physikalische Adresse in dem lokalen Netzwerk des Fernkopierers sind.

15. Fernkopierer nach Anspruch 13 oder 14, **dadurch gekennzeichnet, dass** er einen Service-Client für die Übermittlung der Verwaltungsinformationen aus eigener Initiative zu der Verwaltungseinheit und Mittel zum Empfang der logischen Adresse und des Port des Verwaltungsservers, der dem Service-Client entspricht, von der Verwaltungseinheit aufweist.

16. Fernkopierer nach Anspruch 15, **dadurch gekennzeichnet, dass** die Verwaltungsinformationen, die auf eigene Initiative von dem Service-Client übermittelt werden, Zustandsinformationen über den Fernkopierer sind, wobei die Informationen bei dem Auslösen eines Alarmsignals übermittelt werden.

17. Fernkopierer nach Anspruch 15 oder 16, **dadurch gekennzeichnet, dass** der Service-Client das SMTP-Protokoll an der IP-Adresse der Verwaltungseinheit an dem Port, der dem Protokoll entspricht, implementiert.

18. Fernkopierer nach Anspruch 17, **dadurch gekennzeichnet, dass** die Verwaltungsinformationen, die auf eigene Initiative von dem Service-Client übermittelt werden, in einer strukturierten, sogenannten MIME-Nachricht eingeschlossen sind.

19. Fernkopierer nach einem der Ansprüche 13 bis 18,
**dadurch gekennzeichnet, dass** die Verwaltungsinformationen Informationen über Konfigurationsparameter aufweisen, wobei die Informationen entweder sogenannte lokale Informationen sind, die bei dem Fernkopierer festgelegt werden und lokal veränderbar sind, oder sogenannte private Informationen, die von einer Verwaltungseinheit speziell an den Fernkopierer übermittelt werden und lokal nicht veränderbar sind, oder sogenannte öffentliche Informationen, die von einer Verwaltungseinheit an mehrere Fernkopierer übermittelt werden und lokal nicht veränderbar sind.

20. Fernkopierer nach einem der Ansprüche 13 bis 19,
**dadurch gekennzeichnet, dass** die Verwaltungsinformationen ein Verzeichnis von Empfängern aufweisen, wobei Teile des Verzeichnisses entweder sogenannte lokale Teile sind, die bei dem Fernkopierer festgelegt werden und lokal veränderbar sind, oder sogenannte öffentliche Teile, die von der Verwaltungseinheit an mehrere Fernkopierer übermittelt werden und nich die lokal veränderbar sind.

21. Fernkopierer nach einem der vorhergehenden Ansprüche,
**dadurch gekennzeichnet, dass** er Mittel zur Entschlüsselung eines neuen Wertes aufweist, der den Verwaltungsinformationen, die verschlüsselt von der Verwaltungseinheit übermittelt werden, zugewiesen werden soll.

22. Fernkopierer nach Anspruch 21, **dadurch gekennzeichnet,**
**dass** der Fernkopierer vor der Übermittlung des neuen Wertes der Verwaltungseinheit eine Zufallszahl übermittelt, wobei der Fernkopierer vor der Entschlüsselung überprüft, ob der Schlüssel der vorher übermittelten Zufallszahl entspricht.

23. Fernkopierer nach einem der Ansprüche 13 bis 22,
**dadurch gekennzeichnet, dass** die Verwaltungsinformationen im XML-Format an die Verwaltungseinheit übermittelt werden.

24. Fernkopierer nach einem der Ansprüche 13 bis 23,
**dadurch gekennzeichnet, dass** er mindestens einen Service-Client und einen Dienst-Server, der das HTTP-Protokoll implementiert, aufweist, die die Verwaltungsinformationen austauschen.

25. Einheit zur Verwaltung einer Gruppe von Fernkopierern, die mit demselben lokalen Netzwerk (10) verbunden sind, wobei die Verwaltungseinheit selbst mit dem lokalen Netzwerk verbunden ist und Mittel (31, 32, 33) zur Speicherung der Informationen zur Verwaltung der Fernkopierer, Mittel (35) zur Übermittlung der Verwaltungsinformationen zu jedem Fernkopierer an seine physikalische Adresse und seine logische Adresse und Mittel (34, 36) zum Empfang der Verwaltungsinformationen aufweist,
**dadurch gekennzeichnet, dass** die Verwaltungseinheit Kennungsmittel (39) aufweist, die von dem Fernkopierer einen Kennungsrahmen empfangen, der die logische Adresse und die physikalische Adresse des Fernkopierers aufweist, und
falls der auf diese Weise empfangene Kennungsrahmen nicht die Kennung der Verwaltungseinheit (30) enthält und falls die logische Adresse des Kennungsrahmens sich in dem Adressierungsplan des lokalen Netzwerkes befindet, senden die Kennungsmittel (39) die logische Adresse der Verwaltungseinheit (30) und eine Kennung der Verwaltungseinheit an den Fernkopierer, damit der Fernkopierer keinen Kennungsrahmen mehr sendet, solange er eingeschaltet bleibt oder solange der Benutzer nicht das erneute Senden des Kennungsrahmens des Fernkopierers befiehlt,
falls der auf diese Weise empfangene Kennungsrahmen nicht die Kennung der Verwaltungseinheit (30) enthält und falls die logische Adresse des Kennungsrahmens null ist oder sich nicht in dem Adressierungsplan des lokalen Netzwerkes befindet, Mittel (38), die vom Benutzer eine gültige logische Adresse verlangen, die mit der physikalischen Adresse verknüpft werden muss, wobei die Kennungsmittel (39) dann die gültige logische Adresse, die logische Adresse der Verwaltungseinheit (30) und eine Kennung der Verwaltungseinheit an den Fernkopierer senden, damit der Fernkopierer keinen Kennungsrahmen mehr sendet, solange er eingeschaltet bleibt oder solange der Benutzer nicht das erneute Senden des Kennungsrahmens des Fernkopierers befiehlt,
falls der auf diese Weise empfangene Kennungsrahmen nicht die Kennung der Verwaltungseinheit (30) enthält, senden die Kennungsmittel (39) die logische Adresse der Verwaltungseinheit (30) an den Fernkopierer, damit der Fernkopierer keinen Kennungsrahmen mehr sendet, solange er eingeschaltet bleibt oder solange der Benutzer nicht das erneute Senden des Kennungsrahmens des Fernkopierers befiehlt,
Verwaltungsinformationen, die dann zwischen der Verwaltungseinheit und dem Fernkopierer ausgetauscht werden können.

26. Einheit zur Verwaltung einer Gruppe von Fernkopierern nach Anspruch 25, **dadurch gekennzeichnet, dass** die logische Adresse und die physikalische Adresse die IP-Adresse beziehungsweise die physikalische Adresse in dem lokalen Netzwerk des jeweiligen Fernkopierers sind.

27. Einheit zur Verwaltung einer Gruppe von Fernkopierern nach einem der Ansprüche 25 bis 26, **dadurch gekennzeichnet, dass** sie mindestens einen Verwaltungsserver aufweist, der mindestens einem Service-Client entspricht, den jeder Fernkopierer aufweist, der aus eigener Initiative die Verwaltungsinformationen zu der Verwaltungseinheit übermittelt, wobei die Kennungsmittel der Verwaltungseinheit die logische Adresse und den Port des Verwaltungsservers an den Fernkopierer übermitteln, wenn die Verbindung hergestellt wurde.

28. Einheit zur Verwaltung einer Gruppe von Fernkopierern nach Anspruch 27, **dadurch gekennzeichnet, dass** die Verwaltungsinformationen, die auf eigene Initiative von dem Service-Client übermittelt werden, Zustandsinformationen über den Fernkopierer sind, wobei die Informationen bei dem Auslösen eines Alarmsignals übermittelt werden.

29. Einheit zur Verwaltung einer Gruppe von Fernkopierern nach Anspruch 27 oder 28, **dadurch gekennzeichnet, dass** der Verwaltungsserver das SMTP-Protokoll implementiert.

30. Einheit zur Verwaltung einer Gruppe von Fernkopierern nach einem der Ansprüche 25 bis 29, **dadurch gekennzeichnet, dass** die Informationen zur Verwaltung eines Fernkopierers Informationen über Konfigurationsparameter aufweisen, wobei die Informationen entweder sogenannte lokale Informationen sind, die bei dem Fernkopierer festgelegt werden und lokal veränderbar sind, oder sogenannte private Informationen, die von der Verwaltungseinheit speziell an den Fernkopierer übermittelt werden und lokal nicht veränderbar sind, oder sogenannte öffentliche Informationen, die von der Verwaltungseinheit an mehrere Fernkopierer übermittelt werden und lokal nicht veränderbar sind,

31. Einheit zur Verwaltung einer Gruppe von Fernkopierern nach einem der Ansprüche 25 bis 30, **dadurch gekennzeichnet, dass** die Informationen zur Verwaltung eines Fernkopierers ein Verzeichnis von Empfängern aufweisen, wobei Teile des Verzeichnisses entweder sogenannte lokale Teile sind, die bei dem Fernkopierer festgelegt werden und lokal veränderbar sind, oder sogenannte öffentliche Teile, die von der Verwaltungseinheit an mehrere Fernkopierer übermittelt werden und die lokal nicht veränderbar sind.

32. Einheit zur Verwaltung einer Gruppe von Fernkopierern nach einem der Ansprüche 25 bis 31, **dadurch gekennzeichnet, dass** ein neuer Wert, der einer Verwaltungsinformation, die an einen Fernkopierer übermittelt wird, zugeordnet werden soll, vorher verschlüsselt wird.

33. Einheit zur Verwaltung einer Gruppe von Fernkopierern nach einem der Ansprüche 25 bis 32, **dadurch gekennzeichnet, dass** die Verwaltungsinformationen mit einem beliebigen Fernkopierer im XML-Format ausgetauscht werden.

34. Einheit zur Verwaltung einer Gruppe von Fernkopierern nach einem der Ansprüche 25 bis 33, **dadurch gekennzeichnet, dass** sie einen Verwaltungsclient und einen Verwaltungsserver aufweist, die das HTTP-Protokoll während des Austauschs der Verwaltungsinformationen implementieren.
